# EUROPÄISCHE PATENTANMELDUNG

(11) **EP 4 841 215 A1**
(43) Veröffentlichungstag der Anmeldung: **18.11.2026**
(21) Anmeldenummer: 25176591.3
(22) Anmeldetag: 15.05.2025
(51) Int. Cl.: G01D 5/244, G01D 5/245

(54) **POSITIONSGEBER**

(71) Anmelder: SICK AG, 79183 Waldkirch (DE)
(72) Erfinder: Sellmer, Christian, 78166 Donaueschingen (DE); Hirmer, Katrin, 78166 Donaueschingen (DE)
(74) Vertreter: Manitz Finsterwald Patent- und Rechtsanwaltspartnerschaft mbB

(57) **Zusammenfassung**

Ein Positionsgeber zur Bestimmung einer Position eines Bauteils, das relativ zu einem anderen Bauteil bewegbar ist, umfasst eine Maßverkörperung, eine Abtasteinrichtung und eine elektronische Auswertungseinheit, die dazu ausgebildet ist, beruhend auf einem von der Abtasteinrichtung empfangenen Abtastsignal die Position des bewegbaren Bauteils zu bestimmen. Die Maßverkörperung umfasst eine Codespur und die Abtasteinrichtung umfasst zwei separate Empfangseinheiten, die um einen vorbestimmten Positionsversatz relativ zueinander versetzt sind und die zum Ausgeben jeweiliger Inkrementalsignale ausgebildet sind. Die elektronische Auswertungseinheit ist dazu ausgebildet, in einem Kalibriermodus eine Phasendifferenz der von den wenigstens zwei separaten Empfangseinheiten ausgegebenen Inkrementalsignale zu bestimmen und anhand der bestimmten Phasendifferenz ein Abweichungssignal zu erzeugen, das eine Abweichung des tatsächlichen Zustands des Positionsgebers von einem gewünschten Zustand angibt.

## Beschreibung

Die Erfindung betrifft einen Positionsgeber zur Bestimmung einer Position eines Bauteils, das relativ zu einem anderen Bauteil bewegbar ist, mit einer an einem der Bauteile befestigbaren Maßverkörperung, einer am anderen Bauteil befestigbaren Abtasteinrichtung zum Abtasten der Maßverkörperung und einer elektronischen Auswertungseinheit, die mit der Abtasteinrichtung in Signalverbindung steht und dazu ausgebildet ist, beruhend auf wenigstens einem von der Abtasteinrichtung empfangenen Abtastsignal die Position des bewegbaren Bauteils zu bestimmen, wobei die Maßverkörperung wenigstens eine Codespur, insbesondere eine Inkremental-Codespur mit einem periodischen Codemuster, umfasst.

Solche Positionsgeber werden auch als Encoder bezeichnet und beispielsweise als Drehgeber dazu verwendet, die aktuelle Drehstellung und/oder die Anzahl von Umdrehungen einer Welle zu ermitteln. Ein wichtiges Anwendungsfeld von Drehgebern sind so genannte Motor-Feedback-Systeme, bei welchen ein Drehgeber in einem Servomotor die Ist-Drehzahl der Motorwelle an die Regelung zurückmeldet. Positionsgeber der angegebenen Art können auch als Lineargeber zur Bestimmung einer linearen Position eines Bauteils ausgeführt sein, das gegenüber einem anderen Bauteil entlang einer Verschiebeachse verschiebbar ist.

Beim Abtasten kommen verschiedene Messprinzipien zum Einsatz, insbesondere optische, magnetische, kapazitive oder induktive. Beispielsweise kann die Maßverkörperung eine periodische Struktur aus transparenten und nichttransparenten Bereichen aufweisen und die Abtasteinrichtung kann eine Lichtquelle als Sender und eine lichtempfindliche Sensor-Anordnung als Empfänger aufweisen. Magnetische Drehgeber detektieren dagegen mit einem Hall-Sensor oder dergleichen entsprechende magnetische Strukturen der Maßverkörperung.

Inkremental-Codespuren sind im Gegensatz zu Absolut-Codespuren einfach auszuwerten. Es ist jedoch ein Referenzpunkt festzulegen, von dem aus die Impulszählung erfolgt. Das periodische Codemuster einer Inkremental-Codespur ist vorzugsweise einheitlich.

Für eine exakte Bestimmung der Winkelposition ist es erforderlich, dass das Zentrum der Codespur mit der Rotationsachse zusammenfällt, das heißt dass die Codespur zu dem drehbaren Bauteil konzentrisch ausgerichtet ist. Aufgrund kaum vermeidbarer Produktions- und Installations-Toleranzen ist dies häufig nicht gegeben, wodurch es zu Abweichungen zwischen der tatsächlichen Winkelposition und der gemessenen Winkelposition kommt. Solchen Abweichungen kann im Rahmen einer Kalibrierung mittels eines Referenz-Encoders entgegengewirkt werden, was jedoch mit einem relativ hohen Aufwand verbunden ist und bei bestimmten Anwendungen nicht praktikabel ist. Eine weitere Möglichkeit zur Behebung der Ungenauigkeiten besteht in einer zeitbasierten Referenzierung, welche jedoch eine Drehzahl mit hoher und oft nur schwer zu erreichender Konstanz voraussetzt. Bei so genannten Kit-Encodern, die erst in der jeweiligen Anwendungssituation zusammenzubauen sind, besteht außerdem das Problem, dass der Anwender sich im Allgemeinen nicht mit Fragen der Kalibrierung und Justage befassen möchte. Bei Lineargebern bestehen ähnliche Probleme wie bei Drehgebern.

Es ist eine Aufgabe der Erfindung, mit einfachen Mitteln die Beeinträchtigung der Messgenauigkeit von Positionsgebern durch produktions- und installationsbedingte Positionsfehler zu verringern.

Die Lösung erfolgt durch einen Positionsgeber mit den Merkmalen des Anspruchs 1.

Erfindungsgemäß umfasst die Abtasteinrichtung wenigstens zwei separate Empfangseinheiten, die um einen vorbestimmten Positionsversatz relativ zueinander versetzt sind und die zum Ausgeben jeweiliger Inkrementalsignale ausgebildet sind, wobei die elektronische Auswertungseinheit dazu ausgebildet ist, in einem Kalibriermodus eine Phasendifferenz der von den wenigstens zwei separaten Empfangseinheiten ausgegebenen Inkrementalsignale zu bestimmen und anhand der bestimmten Phasendifferenz ein Abweichungssignal zu erzeugen, das eine Abweichung des tatsächlichen Zustands des Positionsgebers von einem gewünschten Zustand angibt.

Die Auswertung der Phasendifferenz der beiden versetzten Empfangseinheiten ermöglicht es, Abweichungen von der geometrischen Idealkonfiguration des Positionsgebers zu ermitteln und nachfolgend während des Normalbetriebs zu berücksichtigen, zum Beispiel durch Korrekturmaßnahmen. Somit kann die Messgenauigkeit des Positionsgebers beträchtlich gesteigert werden. Dadurch, dass das Abweichungssignal aus der Phasendifferenz abgeleitet wird und nicht etwa aus der absoluten Positionsdifferenz der beiden versetzten Empfangseinheiten, ist das Vorsehen einer Absolut-Codespur nicht zwingend erforderlich. Die Maßverkörperung kann jedoch zusätzlich zu einer oder mehreren Inkremental-Codespuren eine Absolut-Codespur aufweisen. Die elektronische Auswertungseinheit kann hierbei dazu ausgebildet sein, eine absolute Position mittels einer kombinierten Auswertung eines absoluten Abtastsignals und eines inkrementellen Abtastsignals zu bestimmen. Die elektronische Auswertungseinheit kann ferner dazu ausgebildet sein, im Normalbetriebsmodus eine andere Codespur als die im Kalibriermodus abzutastende Codespur auszuwerten und/oder ein Abtastsignal einer weiteren Empfangseinheit zu empfangen.

Die Maßverkörperung kann auch für eine Bestimmung einer Feinposition beruhend auf einer Absolut-Codespur ausgelegt sein.

Vorzugsweise ist die elektronische Auswertungseinheit dazu ausgebildet, für wenigstens zwei verschiedene Positionen des bewegbaren Bauteils die Phasendifferenz der von den wenigstens zwei separaten Empfangseinheiten ausgegebenen Inkrementalsignale zu bestimmen und das Abweichungssignal anhand der wenigstens zwei bestimmten Phasendifferenzen zu erzeugen. Wenn die Phasendifferenz an unterschiedlichen Positionen bekannt ist, lassen sich daraus auf relativ einfache Weise systematische Fehler wie zum Beispiel die Exzentrizität ableiten. Da das Abweichungssignal nicht kontinuierlich erzeugt werden muss, sondern lediglich im Kalibriermodus, besteht ausreichend Zeit für das Bewegen der Maßverkörperung zum Bestimmen mehrerer Phasendifferenzen.

Die elektronische Auswertungseinheit kann insbesondere dazu ausgebildet sein, für eine Vielzahl von Positionen des bewegbaren Bauteils, die über einen Bewegungspfad gleichmäßig verteilt angeordnet sind, die jeweiligen Phasendifferenzen der von den wenigstens zwei separaten Empfangseinheiten ausgegebenen Inkrementalsignale zu bestimmen und das Abweichungssignal anhand sämtlicher bestimmter Phasendifferenzen und/oder anhand eines Phasendifferenz-Verlaufs bestimmen. Dies ermöglicht das Erzeugen eines besonders robusten Abweichungssignals.

Gemäß einer Ausführungsform der Erfindung gibt das Abweichungssignal einen systematischen Positionsfehler des Positionsgebers an.

Gemäß einer weiteren Ausführungsform der Erfindung ist der Positionsgeber als Drehgeber zur Bestimmung einer Winkelposition eines Bauteils ausgeführt, das relativ zu einem anderen Bauteil um eine Rotationsachse drehbar ist, wobei die wenigstens zwei separaten Empfangseinheiten bezüglich der Rotationsachse um einen vorbestimmten Winkelversatz relativ zueinander versetzt sind.

Gemäß einer alternativen Ausführungsform der Erfindung ist der Positionsgeber als Lineargeber zur Bestimmung einer linearen Position eines Bauteils ausgeführt, das gegenüber einem anderen Bauteil entlang einer Verschiebeachse verschiebbar ist.

Das Abweichungssignal kann eine Exzentrizität der Maßverkörperung und/oder der Inkremental-Codespur bezüglich der Rotationsachse angeben. Für den Zusammenhang zwischen der Phasendifferenz *Δα* und der Exzentrizität *ε* gilt: $Δ α = \frac{180}{π} \times b \times \frac{2 ∈}{{R}^{2} - {∈}^{2}}$ wobei b die Bogenlänge zwischen den Empfangseinheiten und R der Radius der Inkremental-Codespur ist. Ein Auflösen der angegebenen Gleichung nach *ε* ermöglicht die Ermittlung der vorhandenen Exzentrizität.

Die elektronische Auswertungseinheit kann dazu ausgebildet sein, anhand der bestimmten Phasendifferenz die relative Lage zwischen der Inkremental-Codespur, insbesondere eines Referenzpunkts des periodischen Codemusters, und wenigstens einer der wenigstens zwei separaten Empfangseinheiten zu bestimmen. Somit können beispielsweise Verdrehungen und Verschiebungen der Empfangseinheiten relativ zur Inkremental-Codespur bestimmt und entsprechend berücksichtigt werden.

Eine weitere Ausführungsform der Erfindung sieht vor, dass die elektronische Auswertungseinheit ein Korrekturmodul aufweist, das dazu ausgebildet ist, die bestimmte Position des bewegbaren Bauteils anhand des Abweichungssignals, insbesondere kontinuierlich, zu korrigieren. Die Abweichungen vom Idealzustand bleiben somit ohne Auswirkungen für den Anwender.

Das Korrekturmodul kann eine Speichereinrichtung zum Ablegen einer Korrekturtabelle mit einer Zuordnung von Positionen und der Höhe des Abweichungssignals aufweisen. Somit kann jeder erfassten Position ein Positionsfehler und somit gegebenenfalls ein Korrekturwert zur Kompensation des Positionsfehlers zugeordnet werden.

Die elektronische Auswertungseinheit kann dazu ausgebildet sein, ein Warnsignal zu erzeugen, wenn das Abweichungssignal einen Schwellwert überschreitet. Bei dieser Ausgestaltung ist es nicht unbedingt erforderlich, die erfasste Position kontinuierlich zu korrigieren. Der Anwender kann den Positionsgeber überprüfen und gegebenenfalls reparieren oder austauschen, wenn das Warnsignal auftritt.

Der vorbestimmte Winkelversatz kann wenigstens 0,5° und höchstens 130°, bevorzugt wenigstens 5° und höchstens 70°, weiter bevorzugt wenigstens 10° und höchstens 50° und besonders bevorzugt wenigstens 15° und höchstens 30° betragen. Dies hat sich hinsichtlich der Bestimmung von Positionsfehlern anhand der Phasendifferenz als besonders günstig erwiesen. Eine spezielle Ausgestaltung der Erfindung sieht vor, dass der Winkelversatz etwa 20° beträgt.

Gemäß einer weiteren Ausführungsform der Erfindung umfasst die Abtasteinrichtung drei oder mehr separate Empfangseinheiten, die um jeweilige vorbestimmte Positionsversätze relativ zueinander versetzt sind und die zum Ausgeben jeweiliger Inkrementalsignale ausgebildet sind. Dies erweitert die Möglichkeiten zum Bestimmen von Positionsfehlern des Positionsgebers anhand von Phasendifferenzen. Bei Vorhandensein von mehr als zwei separaten Empfangseinheiten kann der Kalibriervorgang unter Umständen verkürzt werden, weil an weniger verschiedenen Positionen, im Idealfall an lediglich einer Position, gemessen werden muss. Insbesondere ermöglicht eine Anordnung aus drei oder mehr separaten Empfangseinheiten die Bestimmung der relativen Lage zwischen der Inkremental-Codespur und den Empfangseinheiten im Falle mehrerer Fehlermöglichkeiten, zum Beispiel bei Vorliegen einer Exzentrizität und einer Verdrehung.

Die Erfindung betrifft auch ein Verfahren zum Bestimmen einer Position eines Bauteils, das relativ zu einem anderen Bauteil bewegbar, insbesondere um eine Rotationsachse drehbar, ist, wobei an einem der Bauteile eine Maßverkörperung und am anderen Bauteil eine Abtasteinrichtung befestigt ist, mittels eines Positionsgebers, insbesondere mittels eines wie vorstehend beschriebenen Positionsgebers, mit den Schritten:
Abtasten der Maßverkörperung mittels der Abtasteinrichtung und
Bestimmen der Position des bewegbaren Bauteils beruhend auf wenigstens einem von der Abtasteinrichtung empfangenen Abtastsignal,
wobei die Maßverkörperung wenigstens eine Codespur, insbesondere eine Inkremental-Codespur mit einem periodischen Codemuster, umfasst und wobei die Abtasteinrichtung wenigstens zwei separate Empfangseinheiten umfasst, die um einen vorbestimmten Positionsversatz relativ zueinander versetzt sind und die zum Ausgeben jeweiliger Inkrementalsignale ausgebildet sind,
Bestimmen einer Phasendifferenz der von den wenigstens zwei separaten Empfangseinheiten ausgegebenen Inkrementalsignale und
Erzeugen eines Abweichungssignals, das eine Abweichung des tatsächlichen Zustands des Positionsgebers von einem gewünschten Zustand angibt, anhand der bestimmten Phasendifferenz.

Durch eine Auswertung der Phasendifferenz der beiden versetzten Empfangseinheiten können Positionsfehler und ähnliche Abweichungen ermittelt und dann im Normalbetrieb berücksichtigt werden, wodurch die Messgenauigkeit des Positionsgebers erhöht werden kann. Das Abweichungssignal kann auch bei einer Justage des Positionsgebers verwendet werden.

Es kann vorgesehen sein, dass das Bestimmen der Phasendifferenz und das Erzeugen des Abweichungssignals in einem Kalibriervorgang durchgeführt wird und das erzeugte Abweichungssignal anschließend zur kontinuierlichen Korrektur der Position herangezogen wird. Die Berechnungen zur Auswertung der Phasendifferenz und das unter Umständen vorzunehmende Bewegen der Maßverkörperung zwecks Bestimmung mehrerer Phasendifferenzen muss dann nur vergleichsweise selten durchgeführt werden, beispielsweise bei Inbetriebnahme des Positionsgebers oder nach einer Justage.

Bevorzugt wird die Maßverkörperung während des Kalibriervorgangs bewegt, insbesondere gedreht, insbesondere um eine volle Umdrehung, wobei für wenigstens zwei verschiedene Positionen die Phasendifferenzen bestimmt werden. Sofern die Phasendifferenz an mehreren verschiedenen Winkelpositionen bekannt ist, kann zum Beispiel die Exzentrizität der Inkremental-Codespur bezüglich der Rotationsachse ermittelt werden.

Weiterbildungen der Erfindung sind auch den abhängigen Ansprüchen, der Beschreibung sowie den beigefügten Zeichnungen zu entnehmen.

Die Erfindung wird nachfolgend beispielhaft unter Bezugnahme auf die Zeichnungen beschrieben.
- Fig. 1: ist eine vereinfachte Draufsicht auf einen erfindungsgemäßen Drehgeber.
- Fig. 2: zeigt die Lage zweier Empfangseinheiten des Drehgebers gemäß Fig. 1 relativ zu einer Inkremental-Codespur für zwei verschiedene Positionierungen der Inkremental-Codespur.

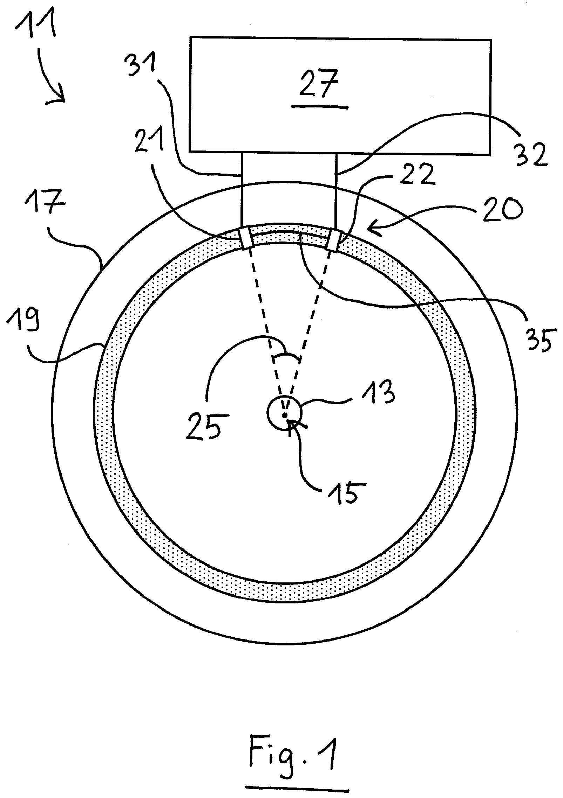

Der in Fig. 1 gezeigte, gemäß einer Ausführungsform der Erfindung gestaltete Drehgeber 11 umfasst eine Welle 13, die um eine Rotationsachse 15 drehbar in einem nicht dargestellten Gehäuse gelagert ist und die für eine mechanische Kopplung mit einer Motorwelle oder dergleichen vorgesehen ist oder selbst eine Motorwelle ist, beispielsweise für den Einsatz in einem Motor-Feedback-System. Mit der Welle 13 antriebswirksam verbunden ist eine Maßverkörperung 17 in Form einer Codescheibe. Auf diese ist eine kreisförmige Inkremental-Codespur 19 mit einem gleichmäßigen periodischen Codemuster aufgebracht. Die Inkremental-Codespur 19 kann durch eine periodische Struktur aus transparenten und nichttransparenten Bereichen gebildet sein. Konzentrisch zu der Inkremental-Codespur 19 kann eine Absolut-Codespur vorgesehen sein, was in Fig. 1 jedoch nicht dargestellt ist.

Zum Abtasten der Codespuren weist der Drehgeber 11 eine nicht mit der Welle 13 mitrotierende Abtasteinrichtung 20 auf, die zwei separate Leseköpfe oder Empfangseinheiten 21, 22 umfasst. Wie gezeigt sind die Empfangseinheiten 21, 22 bezogen auf die Rotationsachse 15 um einen Winkelversatz 25 relativ zueinander versetzt angeordnet. Vorzugsweise beträgt der Winkelversatz 25 wenigstens 2° und höchstens 80°. Die Empfangseinheiten 21, 22 stehen mit einer elektronischen Auswertungseinheit 27 des Drehgebers 11 in Signalverbindung und geben während des Betriebs desselben jeweilige Inkrementalsignale 31, 32 aus. Grundsätzlich könnte auch die Abtasteinrichtung 20 mit der Welle 13 antriebswirksam verbunden sein und die Maßverkörperung 17 so montiert sein, dass sie nicht mit der Welle 13 mitrotiert.

Die elektronische Auswertungseinheit 27 ist dazu ausgebildet, in einem Normalbetriebsmodus beruhend auf einem der Inkrementalsignale 31, 32 oder auf beiden Inkrementalsignalen 31, 32 und gegebenenfalls auf einem zusätzlichen Absolutwertsignal die Winkelposition der Maßverkörperung 17 und somit der Welle 13 zu bestimmen.

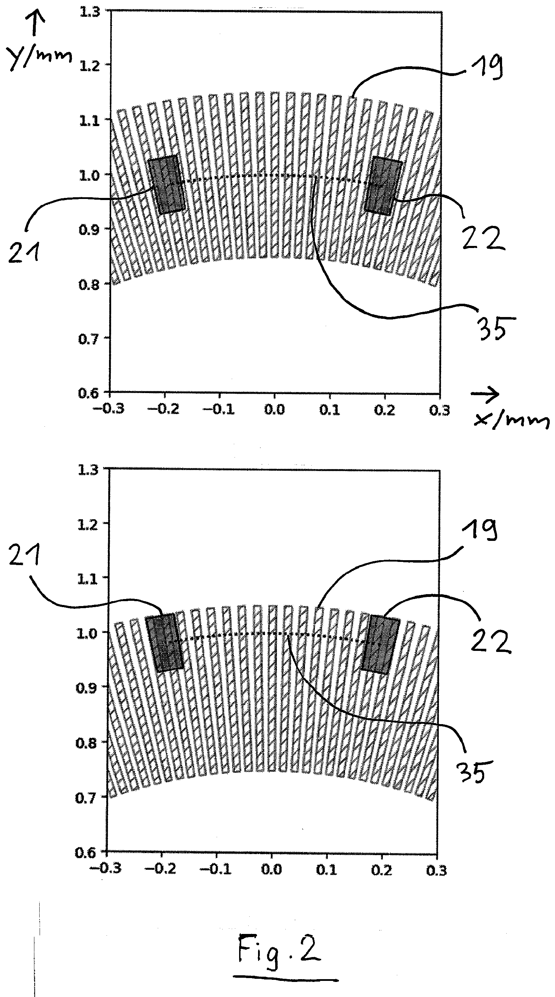

Aufgrund von Produktions- und Montage-Toleranzen kann es zu systematischen Fehlern bei der Positionierung der Maßverkörperung 17 und/oder der Inkremental-Codespur 19 kommen. Beispielsweise kann das Zentrum der Inkremental-Codespur 19 gegenüber der Rotationsachse 15 verschoben sein, das heißt es kann eine Exzentrizität vorliegen. Die Empfangseinheiten 21, 22 der Abtasteinrichtung 20 befinden sich je nach Ausmaß der Exzentrizität an unterschiedlichen radialen Positionen der Inkremental-Codespur 19, wie dies in Fig. 2 am Beispiel von zwei verschiedenen Situationen gezeigt ist. Da die Bogenlänge 35 zwischen den beiden Empfangseinheiten 21, 22 fest ist, der Periodenabstand sich jedoch in radialer Richtung ändert, ergibt sich eine von der Exzentrizität abhängige Phasendifferenz zwischen den Inkrementalsignalen 21, 22. Diese Phasendifferenz wird bei dem erfindungsgemäßen Drehgeber 11 dazu genutzt, die Exzentrizität oder einen ähnlichen systematischen Fehler zu erfassen.

Die elektronische Auswertungseinheit 27 ist hierfür dazu ausgebildet, in einem Kalibriermodus die Phasendifferenz *Δα* der Inkrementalsignale 21, 22 zu bestimmen und daraus die Exzentrizität *ε* zu bestimmen, beispielsweise unter Verwendung des Zusammenhangs: $Δ α = \frac{180}{π} \times b \times \frac{2 ∈}{{R}^{2} - {∈}^{2}}$

wobei b die Bogenlänge 35 zwischen den Empfangseinheiten 21, 22 und R der mittlere Radius der Inkremental-Codespur 19 ist.

In dem Kalibriermodus wird die Welle 13 gedreht, vorzugsweise um wenigstens eine volle Umdrehung, wobei für eine Vielzahl von unterschiedlichen Winkelpositionen der Welle 13 die Phasendifferenz *Δα* bestimmt wird. Die Berechnung der Exzentrizität *ε* kann dann unter Berücksichtigung sämtlicher bestimmter Phasendifferenzen *Δα* berechnet werden. Außerdem kann die elektronische Auswertungseinheit 27 anhand der bestimmten Phasendifferenzen *Δα* die relative Lage zwischen der Inkremental-Codespur 19 und den Empfangseinheiten 21, 22 bestimmen.

Um auch größere Phasendifferenzen *Δα* zuverlässig auswerten zu können, kann die elektronische Auswertungseinheit 27 einen Zähler verwenden, der die Anzahl der Perioden beim Verdrehen der Maßverkörperung 17 zählt.

Die elektronische Auswertungseinheit 27 weist ein Korrekturmodul auf, das dazu ausgebildet ist, im Normalbetriebsmodus die bestimmte Winkelposition der Welle 13 unter Berücksichtigung der bestimmten Exzentrizität *ε* kontinuierlich zu korrigieren, so dass die Messgenauigkeit des Drehgebers 11 durch den systematischen Positionsfehler nicht beeinträchtigt ist. Im Normalbetriebsmodus ist es ausreichend, nur eine der beiden Empfangseinheiten 21, 22 auszuwerten. Außerdem könnte der Drehgeber 11 eine zweite Abtasteinrichtung 20 aufweisen, die ausschließlich für den Normalbetriebsmodus vorgesehen ist.

Das Kompensieren des Positionsfehlers kann beispielsweise mittels einer Korrekturtabelle erfolgen, die eine Zuordnung von Winkelpositionen und Exzentrizität bereitstellt. Die Korrekturtabelle kann in einem nicht eigens dargestellten Speicher der elektronischen Auswertungseinheit 27 abgelegt sein.

Alternativ oder zusätzlich zu der Kompensation des Positionsfehlers kann die elektronische Auswertungseinheit 27 dazu ausgebildet sein, ein Warnsignal zu erzeugen, wenn die bestimmte Exzentrizität *ε* bzw. eine bestimmte Phasendifferenz einen Schwellwert überschreitet. Bei Auftreten des Warnsignals kann der Drehgeber 11 repariert oder ausgetauscht werden.

Um die Möglichkeiten der Fehlererfassung zu erweitern, können auch mehr als zwei zueinander versetzte Empfangseinheiten 21, 22 vorgesehen sein, die jeweilige Inkrementalsignale 31, 32 ausgeben.

Die Erfindung ermöglicht die zuverlässige Kalibrierung und Justage eines Drehgebers 11 ohne das Erfordernis eines Referenz-Encoders. Die Erfindung eignet sich im Übrigen nicht nur wie beschrieben für einen Drehgeber 11, sondern auch für einen Lineargeber oder Linearencoder.

### Bezugszeichenliste:

- 11: Drehgeber
- 13: Welle
- 15: Rotationsachse
- 17: Maßverkörperung
- 19: Inkremental-Codespur
- 20: Abtasteinrichtung
- 21: Empfangseinheit
- 22: Empfangseinheit
- 25: Winkelversatz
- 27: Auswertungseinheit
- 31: Inkrementalsignal
- 32: Inkrementalsignal
- 35: Bogenlänge

## Patentansprüche

1. Positionsgeber (11) zur Bestimmung einer Position eines Bauteils (13), das relativ zu einem anderen Bauteil bewegbar ist, mit einer an einem der Bauteile (13) befestigbaren Maßverkörperung (17), einer am anderen Bauteil befestigbaren Abtasteinrichtung (20) zum Abtasten der Maßverkörperung (17) und einer elektronischen Auswertungseinheit (27), die mit der Abtasteinrichtung (20) in Signalverbindung steht und dazu ausgebildet ist, beruhend auf wenigstens einem von der Abtasteinrichtung (20) empfangenen Abtastsignal die Position des bewegbaren Bauteils (13) zu bestimmen, wobei die Maßverkörperung (17) wenigstens eine Codespur, insbesondere eine Inkremental-Codespur (19) mit einem periodischen Codemuster, umfasst, wobei die Abtasteinrichtung (20) wenigstens zwei separate Empfangseinheiten (21, 22) umfasst, die um einen vorbestimmten Positionsversatz (25) relativ zueinander versetzt sind und die zum Ausgeben jeweiliger Inkrementalsignale (31, 32) ausgebildet sind,
und wobei die elektronische Auswertungseinheit (27) dazu ausgebildet ist, in einem Kalibriermodus eine Phasendifferenz der von den wenigstens zwei separaten Empfangseinheiten (21, 22) ausgegebenen Inkrementalsignale (31, 32) zu bestimmen und anhand der bestimmten Phasendifferenz ein Abweichungssignal zu erzeugen, das eine Abweichung des tatsächlichen Zustands des Positionsgebers (11) von einem gewünschten Zustand angibt.

2. Positionsgeber nach Anspruch 1,
wobei die elektronische Auswertungseinheit (27) dazu ausgebildet ist, für wenigstens zwei verschiedene Positionen des bewegbaren Bauteils (13) die Phasendifferenz der von den wenigstens zwei separaten Empfangseinheiten (21, 22) ausgegebenen Inkrementalsignale (31, 32) zu bestimmen und das Abweichungssignal anhand der wenigstens zwei bestimmten Phasendifferenzen zu erzeugen.

3. Positionsgeber nach Anspruch 2,
wobei die elektronische Auswertungseinheit (27) dazu ausgebildet ist, für eine Vielzahl von Positionen des bewegbaren Bauteils (13), die über einen Bewegungspfad gleichmäßig verteilt angeordnet sind, die jeweiligen Phasendifferenzen der von den wenigstens zwei separaten Empfangseinheiten (21, 22) ausgegebenen Inkrementalsignale (31, 32) zu bestimmen und das Abweichungssignal anhand sämtlicher bestimmter Phasendifferenzen und/oder anhand eines Phasendifferenz-Verlaufs bestimmen.

4. Positionsgeber nach einem der vorstehenden Ansprüche,
wobei das Abweichungssignal einen systematischen Positionsfehler des Positionsgebers (11) angibt.

5. Positionsgeber nach einem der vorstehenden Ansprüche,
wobei der Positionsgeber (11) als Drehgeber zur Bestimmung einer Winkelposition eines Bauteils (13) ausgeführt ist, das relativ zu einem anderen Bauteil um eine Rotationsachse (15) drehbar ist, und wobei die wenigstens zwei separaten Empfangseinheiten (21, 22) bezüglich der Rotationsachse (15) um einen vorbestimmten Winkelversatz (25) relativ zueinander versetzt sind.

6. Positionsgeber nach Anspruch 5,
wobei der vorbestimmte Winkelversatz (25) wenigstens 0,5° und höchstens 130°, bevorzugt wenigstens 5° und höchstens 70°, weiter bevorzugt wenigstens 10° und höchstens 50° und besonders bevorzugt wenigstens 15° und höchstens 30°, beträgt.

7. Positionsgeber nach Anspruch 4 und 5 oder nach Anspruch 4 und 6, wobei das Abweichungssignal eine Exzentrizität der Maßverkörperung (17) und/oder der Codespur (19) bezüglich der Rotationsachse (15) angibt.

8. Positionsgeber nach einem der vorstehenden Ansprüche,
wobei die elektronische Auswertungseinheit (27) dazu ausgebildet ist, anhand der bestimmten Phasendifferenz die relative Lage zwischen der Codespur (19), insbesondere eines Referenzpunkts eines periodischen Codemusters, und wenigstens einer der wenigstens zwei separaten Empfangseinheiten (21, 22) zu bestimmen.

9. Positionsgeber nach einem der vorstehenden Ansprüche,
wobei die elektronische Auswertungseinheit (27) ein Korrekturmodul aufweist, das dazu ausgebildet ist, die bestimmte Position des bewegbaren Bauteils (13) anhand des Abweichungssignals, insbesondere kontinuierlich, zu korrigieren.

10. Positionsgeber nach Anspruch 9,
wobei das Korrekturmodul eine Speichereinrichtung zum Ablegen einer Korrekturtabelle mit einer Zuordnung von Positionen und der Höhe des Abweichungssignals aufweist.

11. Positionsgeber nach einem der vorstehenden Ansprüche,
wobei die elektronische Auswertungseinheit (27) dazu ausgebildet ist, ein Warnsignal zu erzeugen, wenn das Abweichungssignal einen Schwellwert überschreitet.

12. Positionsgeber nach einem der vorstehenden Ansprüche,
wobei die Abtasteinrichtung (20) drei oder mehr separate Empfangseinheiten (21, 22) umfasst, die um jeweilige vorbestimmte Positionsversätze (25) relativ zueinander versetzt sind und die zum Ausgeben jeweiliger Inkrementalsignale (31, 32) ausgebildet sind.

13. Verfahren zum Bestimmen einer Position, insbesondere einer Winkelposition, eines Bauteils (13), das relativ zu einem anderen Bauteil bewegbar, insbesondere um eine Rotationsachse (15) drehbar, ist, wobei an einem der Bauteile (13) eine Maßverkörperung (17) und am anderen Bauteil eine Abtasteinrichtung (20) befestigt ist, mittels eines Positionsgebers (11), insbesondere mittels eines Positionsgebers (11) nach einem der vorstehenden Ansprüche, mit den Schritten:
Abtasten der Maßverkörperung (17) mittels der Abtasteinrichtung (20) und Bestimmen der Position des bewgbaren Bauteils (13) beruhend auf wenigstens einem von der Abtasteinrichtung (20) empfangenen Abtastsignal,
wobei die Maßverkörperung (17) wenigstens eine Codespur, insbesondere eine Inkremental-Codespur (19) mit einem periodischen Codemuster, umfasst und wobei die Abtasteinrichtung (20) wenigstens zwei separate Empfangseinheiten (21, 22) umfasst, die um einen vorbestimmten Positionsversatz (25) relativ zueinander versetzt sind und die zum Ausgeben jeweiliger Inkrementalsignale (31, 32) ausgebildet sind,
Bestimmen einer Phasendifferenz der von den wenigstens zwei separaten Empfangseinheiten (21, 22) ausgegebenen Inkrementalsignale (31, 32) und Erzeugen eines Abweichungssignals, das eine Abweichung des tatsächlichen Zustands des Positionsgebers (11) von einem gewünschten Zustand angibt, anhand der bestimmten Phasendifferenz.

14. Verfahren nach Anspruch 13,
wobei das Bestimmen der Phasendifferenz und das Erzeugen des Abweichungssignals in einem Kalibriervorgang durchgeführt wird und das erzeugte Abweichungssignal anschließend zur kontinuierlichen Korrektur der Position herangezogen wird.

15. Verfahren nach Anspruch 14,
wobei die Maßverkörperung (17) während des Kalibriervorgangs bewegt, insbesondere gedreht, wird, insbesondere um eine volle Umdrehung, und für wenigstens zwei verschiedene Positionen die Phasendifferenzen bestimmt werden.
